# EUROPÄISCHE PATENTSCHRIFT

(11) **EP 0 673 955 B1**
(45) Veröffentlichungstag und Bekanntmachung des Hinweises auf die Patenterteilung: **16.06.1999**
(21) Anmeldenummer: 95103823.1
(22) Anmeldetag: 16.03.1995
(51) Int. Cl.: C08G 2/28

(54) **Verfahren zur Aufarbeitung von rohem Polyoxymethylen**
Process for treating crude polyoxymethylene
Procédé de traitement de polyoxyméthylène brut

(30) Priorität: 22.03.1994 DE 4409744
(43) Veröffentlichungstag der Anmeldung: 27.09.1995
(73) Patentinhaber: Degussa Aktiengesellschaft, 60311 Frankfurt (DE)
(72) Erfinder: Arnoldi, Detlef, Dr., D-67273 Weisenheim am Berg (DE); Gropp, Udo, Dr., D-64665 Alsbach-Hähnlein (DE); Nun, Edwin, Dr., D-63636 Brachttal (DE)

(56) Entgegenhaltungen:
- DE-A- 1 595 340
- DE-B- 1 248 939
- FR-A- 2 280 659

## Beschreibung

Die Erfindung betrifft ein Verfahren zur Aufarbeitung von rohem Polyoxymethylen, wobei insbesondere die Abtrennung instabiler Anteile aus rohem Polyoxymethylen, vor allem von Restmonomerem, welches wenigstens teilweise in Form zyklischer Formaldehydderivate vorliegt, durch Behandlung des rohen Polyoxymethylens vor einer sich möglicherweise anschließenden Stabilisierungsbehandlung mit einem inerten gasförmigen Medium zur trockenen Austreibung des Restmonomeren, Gegenstand der Erfindung ist.

Polyoxymethylen ist ein äußerst nützlicher technischer Kunststoff, der aufgrund seiner physikalischen Eigenschaften auf verschiedensten Gebieten eine breite Anwendung findet.

Polyoxymethylene weisen als Rohpolymerisate im allgemeinen eine ungenügende Stabilität auf und müssen daher besonderen Aufarbeitungsschritten unterworfen werden, bevor sie nach üblichen Formgebungsverfahren zu Formkörpern, Fäden, Folien u. dgl. verarbeitet werden können.

Zu den Maßnahmen, die zur Aufarbeitung und Stabilisierung des rohen Polyoxymethylens verwendet werden können, gehören bekanntermaßen
a) die Desaktivierung von sauren Katalysatorbestandteilen, die zur Polymerisation benötigt werden;
b) die Entfernung von nicht umgesetztem Monomeren aus dem Rohpolymerisat;
c) die Entfernung oder Blockierung von instabilen Kettenenden; und/oder
d) die Einarbeitung von Stabilisatoren in das Rohpolymerisat zum Schutz vor Wärme, Sauerstoff, Licht, sauren Substanzen und/oder anderen "schädlichen" Substanzen.

Die genannten Maßnahmen werden entweder alleine oder in Kombination angewendet. Die Art der Kombination verschiedener Maßnahmen sowie der Zeitpunkt ihrer Anwendung im Verfahren sind bei den bekannten Aufarbeitungs- und Stabilisierungsverfahren unterschiedlich.

Besondere Beachtung finden allerdings in vielen Verfahren die Desaktivierung sauer Katalysatorbestandteile sowie die Restmonomerenentfernung. So ist beispielsweise bekannt, daß die Copolymerisation von Formaldehyd oder zyklischen Oligomeren des Formaldehyds, vorzugsweise 1,3,5-Trioxan, mit geeigneten Comonomeren wie zyklischen Ethern und Acetalen in Gegenwart von kationischen Polymerisationskatalysatoren (US-PSen 3 027 352 und 3 803 094), im allgemeinen nicht vollständig abläuft. Je nach Polymerisationsverfahren und -bedingungen werden z. B. 10 bis 50 % der Monomeren bei der Reaktion nicht umgesetzt und verbleiben im Polymerisationsaggregat, das sie gasförmig und/oder in mit dem Polymerisat verbundener Form verlassen. Die Abtrennung und Rückgewinnung der nicht umgesetzten Monomeren erfordert einen erheblichen Zeit- und Arbeitsaufwand.

Es ist bekannt, die Aufarbeitung von Polyoxymethylen durch Desaktivierung des verwendeten Katalysators durch basische Zusätze in wäßriger Phase oder in einem organischen Lösungsmittel für beispielsweise Trioxan und nachfolgenden Filtrations-, Wasch- und Trocknungsschritten durchzuführen. Diese Arbeitsweise ist aufwendig, wobei große Lösungsmittelmengen zur Rückgewinnung des Monomeren erforderlich waren.

Des weiteren ist bereits eine Abtrennung der Restmonomeren aus rohen Polyoxymethylenen durch Behandlung mit einem inerten Gas bei erhöhter Temperatur (115 bis 170 °C) in Gegenwart von thermischen Stabilisatoren und/oder gasförmigen Desaktivatoren, z. B. aliphatischen Aminen, beschrieben worden. Die Desaktivierung, das Entfernen der Restmonomeren und das Einarbeiten von Stabilisatoren wird gleichzeitig in einem einzigen Verfahrensschritt durchgeführt. An diesem Verfahren ist nachteilig, daß die Restmonomeren aus großen Trägergasmengen zurückgewonnen werden müssen und, daß die Desaktivatoren vor einer Wiederverwendung der zurückgewonnenen Monomeren quantitativ entfernt werden müssen. Die Behandlungszeiten erfordern mit 5 Minuten bis 8 h entsprechend große technische Apparaturen (US-PS 3 210 322).

Weiterhin kennt man die Verwendung von Lösungsmitteln und Desaktivatoren in der Gasphase, und zwar in einem bestimmten Temperaturbereich, der keine Depolymerisation des erzeugten Polyoxymethylencopolymeren bewirkt. Dabei wird ein Schmelzen des Polyoxymethylens vermieden. Für diese Verfahrensweise ist die Bedeutung der Temperatur hervorgehoben, wobei für unterschiedliche Desaktivatoren unterschiedliche Temperaturbereiche angegeben sind (DE-OS 33 11 145).

Auch ist es bekannt, daß rohe Polyoxymethylene bei Abwesenheit erheblicher Mengen von Trioxan, d. h. von Restmonomeren, durch saure Katalysatorreste abgebaut werden. Ein Verfahren schreibt deshalb vor, die Desaktivierung der Katalysatorreste vor der Entfernung der Restmonomeren durchzuführen (US-PS 2 989 509).

Die Entfernung von Restmonomer oder anderer instabiler flüchtiger Bestandteile des rohen Polyoxymethylens und die Desaktivierung können, wie aus vorgenannten Patentanmeldungen bzw. Patenten deutlich wird, sowohl einzeln als auch in Kombination durchgeführt werden. Beide Schritte können entscheidend die Qualität des Endproduktes beeinflussen.

In der Regel folgt auf die Entfernung des nicht umgesetzten Monomeren und den Desaktivierungsschritt, die meist zusammen durchgeführt werden, die Entfernung instabiler Kettenenden. Hierunter ist sowohl die chemische Reaktion der Abspaltung instabiler Kettenenden als auch deren physikalische Abtrennung durch z. B. Temperaturerhöhung mit Entgasung zu verstehen.

Eine Kombination von Restmonomerenentfernung, Desaktivierung und Entfernung instabiler Kettenenden ist grundsätzlich möglich, z. B. DE 12 46 244.

Gegenstand der DE-OS 14 95 666 ist ein Verfahren zum Stabilisieren von Polyoxymethylenen, die halbacetalische Endgruppen enthalten, bei dem die rohen Polyoxymethylencopolymerisate bei Temperaturen von 100 °C bis zum Sinterpunkt der Polyoxymethylene unter einem Druck höher als Atmosphärendruck mit gesättigtem Dampf behandelt werden, der 0,1 bis 10 % flüchtigen, basischen Katalysator und 1 bis 50 % Quellmittel enthält.

Die Behandlung der Rohpolymerisate wird danach essentiell im Druckgefäß durchgeführt, während Quellmittel wie Alkohol, Ketone oder Ether und basische Bestandteile wie Ammoniak oder Alkylamine zur Entfernung von Restmonomer und zur Abspaltung instabiler Kettenenden zugesetzt sind. Insbesondere wird nach DE-OS 14 95 666 kein nennenswerter Endgruppenabbau erreicht, wenn bei Atmosphärendruck behandelt wird.

Andere Verfahren beschreiben das Aufschmelzen der Polyoxymethylene bei den Schritten Desaktivierung und/oder Entmonomerisierung und/oder Entfernung instabiler Kettenenden (DE-OS 37 03 790, DE-OS 37 38 632 und EP 0 137 305 A3).

Die gezielte Entfernung instabiler Anteile und restlicher Monomerer in einem kontinuierlichen Schmelzverfahren ist ebenfalls beschrieben. Hierbei wird das Rohpolymerisat zusammen mit alkalisch wirkenden Verbindungen rasch unter intensivem Kneten geschmolzen und in geschmolzenem Zustand durch eine unter Vakuum stehende Zone einer Entgasungsvorrichtung transportiert. Als wesentlicher Schritt wird bei diesem Verfahren angesehen, daß die Rohpolymerisate unter Zusatz der genannten Verbindungen, die die Katalysatorreste inaktivieren, vorwiegend mit Hilfe mechanischer Energie aufschmilzt (DE-AS 12 46 244).

Gleichzeitig mit einem der Aufarbeitungsschritte, oder aber nachträglich, kann der Zusatz von geeigneten Stabilisatoren erfolgen.

Die DE 12 48 939, welche ein Zusatzpatent zur DE 12 42 874 ist, offenbart, daß ein feingemahlenes Copolymerisat aus Trioxan und Dioxolan mit überhitztem Wasserdampf (140 °C-155 °C) behandelt wird. Allerdings schreibt die genannte Schrift essentiell vor, daß die Copolymerisate aufgeschmolzen und homogenisiert werden, wobei der Mischung vor oder beim Aufschmelzen und Homogenisieren zusätzlich kleine Mengen anorganischer und/oder organischer Basen und/oder basisch wirkender Verbindungen zugesetzt werden.

Aus der DE 15 95 340 ist ein Verfahren zum Entfernen flüchtiger Anteile aus Polyformaldehyd bekannt, bei dem man mit üblichen Entgasungsvorrichtungen in Gegenwart von Wasserdampf arbeitet. Die Hauptmenge flüchtiger Anteile wird entfernt, indem das Polymerisat unter Zusatz von 100 ppm Natriumfluorid aufgeschmolzen wird. Natriumfluorid ist eine basisch wirkende Substanz.

Aus der FR 2 280 659, die auf der DE 24 36 384 basiert, kennt man ein Verfahren, bei dem ein inertes Gas mit POM kontaktiert wird, wobei das POM stabilisiert unf fest vorliegt und die Temperatur beim Vorgang erhöht ist. Die übliche Stabilisierung von POM umfaßt basische Substanzen.

Aus den vorstehend genannten Druckschriften wird die Bedeutung dieser Aufarbeitungsschritte für die Wirtschaftlichkeit des einzelnen Verfahrens und für die Qualität der Fertigprodukte deutlich. So kann in Abhängigkeit von vielen Einzelgrößen (Korngröße des Rohpolymeren, Temperatur, Verweilzeit, Desaktivatorart und -menge, Katalysatorart und -menge, mechanische Durchmischung, Gegenwart von Stabilisatoren usw.) eine mehr oder minder starke Schädigung der Rohpolymeren eintreten, die sich z. B. in einem Anstieg von Schmelzindex und instabilen Anteilen zu erkennen gibt.

Problematisch ist auch, daß die Restmonomeren z. T. aus größeren Lösungsmittel- oder größeren Trägergasmengen zurückgewonnen werden müssen. Sind Desaktivatoren zugegen, stellt sich immer die zusätzliche Aufgabe der Trennung von den Restmonomeren. Insgesamt ist die Wiedergewinnung der erneut einsetzbaren Restmonomeren umständlich und unwirtschaftlich.

Angesichts der im Stand der Technik vorhandenen Nachteile ist es daher wünschenswert, ein Verfahren anzugeben, daß eine schnelle, einfache und wirtschaftliche Aufarbeitung von rohen Polyoxymethylenen gestattet und die Erzeugung stabiler Polymerisate ermöglicht. Darüber hinaus soll das neue Verfahren vor allem auch für den kontinuierlichen Betrieb geeignet sein. Weiterhin soll die

Wiedereinsetzbarkeit der abgetrennten Monomeren ohne großen Aufwand möglich sein.

Diese und weitere nicht näher ausgeführte Probleme werden durch ein Verfahren zur Aufarbeitung von rohem, restmonomerhaltigem Polyoxymethylen, wobei das Restmonomer, das in der Polymerisationsreaktion zur Herstellung des Polyoxymethylens nicht verbraucht wurde, wenigstens teilweise in Form zyklischer Formaldehydderivate vorliegt, bei dem das rohe, restmonomerhaltige Polyoxymethylen vor einer ggf. sich anschließenden Stabilisierung trocken mit einem gegenüber Polyoxymethylen inerten gasförmigen Medium bei einer Temperatur zwischen 114 °C und seiner Erweichungstemperatur und bei einem Druck von weniger als 1,2 · 10⁵ Pa behandelt wird, das sich dadurch kennzeichnet, daß als gasförmiges Medium reiner drucklos überhitzter Wasserdampf verwendet wird, so daß ein Polyoxymethylen mit einem Gehalt von weniger als 2 Gew.-% Restmonomer resultiert.

Die Hauptbestandteile der erfindungsgemäß behandelten Polyoxymethylene können Homopolymere des Formaldehyds oder des Trioxans sein oder Copolymere des Trioxans. Sie können eine lineare Struktur aufweisen, aber auch verzweigt oder vernetzt sein. Eingesetzt werden können sie einzeln oder als Gemische.

Unter Homopolymeren des Formaldehyds oder des Trioxans werden dabei solche Polymere verstanden, deren halbacetalische Hydroxylendgruppen chemisch, beispielsweise durch Veresterung oder Veretherung, gegen Abbau stabilisiert sind. Unter Copolymeren des Trioxans werden Copolymere aus Trioxan und mindestens einer mit Trioxan copolymerisierbaren Verbindung verstanden.

Solche mit Trioxan copolymerisierbare Verbindungen sind beispielsweise cyclische Ether mit 3 bis 5, vorzugsweise 3 Ringgliedern, von Trioxan verschiedene cyclische Acetale, insbesondere Formale, mit 5 bis 11, vorzugsweise 5 bis 8 Ringgliedern, und lineare Polyacetale, insbesondere Polyformale. Die genannten Cokomponenten werden jeweils in Mengen von 0,01 bis 20, vorzugsweise 0,1 bis 10, insbesondere 1 bis 5 Gew.-%, eingesetzt.

Als Comonomere sind insbesondere Verbindungen der Formel 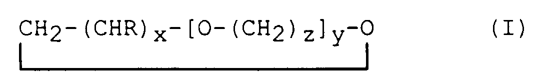 geeignet, in der R ein Wasserstoffatom, einen Alkylrest mit 1 - 6, vorzugsweise 1, 2 oder 3 Kohlenstoffatomen, der mit 1, 2 oder 3 Halogenatomen, vorzugsweise Chloratomen, substituiert sein kann, einen Alkoxymethylrest mit 2 bis 6, vorzugsweise 2, 3 oder 4 Kohlenstoffatomen, einen Phenylrest oder einen Phenoxymethylrest bedeutet, x eine ganze Zahl von 1 bis 3, wobei y gleich Null ist, y eine ganze Zahl von 1 bis 3, wobei x gleich Null und z gleich 2 ist, und z eine ganze Zahl von 3 bis 6, vorzugsweise 3 oder 4, darstellt, wobei x gleich Null und y gleich 1 ist.

Als cyclische Ether eignen sich vor allem Epoxide, z. B. Ethylenoxid, Styroloxid, Propylenoxid oder Epichlorhydrin, sowie Glycidylether von ein- oder mehrwertigen Alkoholen oder Phenolen.

Als cyclische Acetale eignen sich vor allem cyclische Formale von aliphatischen oder cycloaliphatischen α,ω-Diolen mit 2 bis 8, vorzugsweise 2, 3 oder 4 Kohlenstoffatomen, deren Kohlenstoffkette in Abständen von 2 Kohlenstoffatomen durch ein Sauerstoffatom unterbrochen sein kann, z. B.,
Glykolformal (1,3-Dioxolan),
Propandiolformal (1,3-Dioxan),
Butandiolformal (1,3-Dioexpan) und
Diglykolformal (1,3,6-Trioxocan) sowie
Hexandiolformal (1,3-Dioxonan) und
Butendiolformal (1,3-Dioxacyclohepten-5).

Es kommen auch Acetale wie 4-Chlormethyl-1,3-dioxolan in Frage, die sich nicht von α,ω-Diolen ableiten.

Geeignet sind weiterhin auch, insbesondere für die Herstellung von Terpolymeren des Trioxans, Diformale oder cyclische Diether, z. B. Diglycerindiformal oder Butandioldiglycidylether.

Als lineare Polyacetale eignen sich sowohl Homo- oder Copolymere der vorstehend definierten cyclischen Acetale als auch lineare Kondensate aus aliphatischen oder cycloaliphatischen α,ω-Diolen mit aliphatischen Aldehyden oder Thioaldehyden, vorzugsweise Formaldehyd. Insbesondere werden Homopolymere cyclischer Formale von aliphatischen α,ω-Diolen mit 2 bis 8, vorzugsweise 2, 3 oder 4 Kohlenstoffatomen verwendet, z. B. Poly-(1,3-dioxolan), Poly-(1,3-dioxan) und Poly-(1,3-dioxepan).

Die Werte für die Viskositätszahl der erfindungsgemäß eingesetzten Polyoxymethylene (gemessen an einer Lösung des Polymeren in Hexafluorisopropanol, das mit methanolischer Natronlauge auf pH 8 bis 9 eingestellt ist, bei 25 °C in einer Konzentration von 0,3 g/100 ml) sollen im allgemeinen mindestens 160 (ml/g) betragen, vorzugsweise größer als 170 (ml/g) sein. Die Kristallitschmelzpunkte der Polyoxymethylene liegen im Bereich von 140 bis 180 °C, vorzugsweise 150 bis 170 °C, ihre Dichten betragen 1,38 bis 1,45 g x ml⁻¹ (gemessen nach DIN 53 479).

Die erfindungsgemäß verwendeten, vorzugsweise binären oder ternären Trioxan-Copolymeren werden in bekannter Weise durch Polymerisieren der Monomeren in Gegenwart kationisch wirksamer Katalysatoren bei Temperaturen zwischen 0 und 150 °C, vorzugsweise zwischen 70 und 140 °C, hergestellt (vgl. z. B. DE-AS 14 20 283). Als Katalysatoren werden hierbei beispielsweise Lewissäuren, wie Bortrifluorid oder Antimonpentafluorid, und Komplexverbindungen von solchen Lewissäuren, vorzugsweise Etherate, z. B. Bortrifluoriddiethyl-etherat oder Bortrifluorid-di-tert.-butyletherat, verwendet. Ferner sind geeignet Protonensäuren, z. B. Perchlorsäure, sowie salzartige Verbindungen, z. B. Triphenylmethylhexafluoroborat, Acetylperchlorat oder Ester der Perchlorsäure, z. B. Methoxymethylperchlorat oder tert.-Butylperchlorat. Zur Regelung des Molekulargewichts können alle Substanzen verwendet werden, von denen bekannt ist, daß sie bei der Polymerisation von Trioxan als Kettenüberträger wirken. Die Polymerisation kann in Masse, Suspension oder Lösung erfolgen. Die erfindungsgemäß verwendeten Homopolymeren des Formaldehyds oder des Trioxans werden ebenfalls in bekannter Weise durch katalytisches Polymerisieren des Monomeren hergestellt (vgl. z. B. DE-ASen 10 37 705 und 11 37 215), wobei die Polymerausbeuten je nach Polymerisationsverfahren und - bedingungen zwischen 70 und 95 % betragen, und die instabilen Halbacetalendgruppen durch Veretherung oder Veresterung stabilisiert.

Es war überraschend und stellt die Überwindung eines bisher bestehenden Vorurteils dar, daß eine Behandlung des rohen Polyoxymethylens mit reinem drucklos überhitztem Wasserdampf als gasförmigen Medium und weniger als 0,1 Vol % einer flüchtigen Base und/oder weniger als 1 Vol % eines flüchtigen Lösungsmittels, d. h. also unter praktischen Gesichtspunkten im wesentlichen in Abwesenheit von Desaktivatoren oder weiteren Hilfsmitteln, ohne Schädigung des Rohpolymerisats möglich ist. Eine Weiterverarbeitung eines erfindungsgemäß behandelten Rohpolymerisats ist problemlos möglich. Stabilisatoren können erst unmittelbar bei oder kurz vor der Weiterverarbeitung zugegeben werden. Insbesondere ist es beim Verfahren gemäß der Erfindung erstmals möglich, das entmonomerisierte Polyoxymethylen ohne Zusatz von Desaktivatoren längere Zeit bis zum Verarbeiten zu lagern, ohne dadurch das rohe Polymere zu schädigen.

Im Rahmen der Erfindung wird unter dem Terminus "Behandlung des restmonomerhaltigen Polyoxymethylens trocken mit einem inerten gasförmigen Medium" oder auch unter dem Terminus "daß Restmonomer aus dem rohen Polyoxymethylen trocken durch Behandlung mit einem gegenüber Polyoxymethylen inerten gasförmigen Medium ausgetrieben wird", nicht verstanden, daß das Rohpolymerisat gänzlich trocken sein muß. Vielmehr ist eine Restfeuchte, die der Gleichgewichtsfeuchte unter den Behandlungsbedingungen entspricht, tolerabel.

Als gasförmige Medien zur Behandlung des rohen Polyoxymethylens kommt reiner überhitzter Wasserdampf in Frage.

Dem Wasserdampf kommt bei der Restmonomerentfernung eine ausgezeichnete "Schleppwirkung" beim Austreiben der Restmonomeren zu.

Eine weitere erfindungswesentliche Eigenschaft des verwendeten Wasserdampfs besteht in seinem geringen Gehalt an flüchtiger Base und/oder Lösungsmittel. In Kombination mit der Verwendung von trockenem, gasförmigem Wasserdampf wird durch den weitgehenden Verzicht auf den Einsatz einer flüchtigen Base und/oder eines flüchtigen Lösungsmittels überraschenderweise eine hohe Qualität des behandelten Polymerisats unter gleichzeitiger Entlastung der Umwelt erreicht, da die flüchtigen Basen und/oder Lösungsmittel unweigerlich einen Nachteil in dieser Hinsicht implizieren.

Wie bereits ausgeführt kann die Behandlungstemperatur des Polyoxymethylens von entscheidender Bedeutung für den Erfolg der Restmonomerentfernung sein. So ist sie bevorzugt so hoch, daß die zu entfernenden Substanzen bereits gasförmig vorliegen, und so niedrig, daß das Polyoxymethylen nicht geschädigt wird.

Bevorzugter Temperaturbereich für das erfindungsgemäße Verfahren ist demnach das Intervall zwischen 115 und 135 °C. Ganz besonders vorteilhaft wird die Restmonomerenentfernung zwischen 120 und 130 °C ausgeführt.

Die Behandlungszeit ist dabei im wesentlichen unkritisch. Selbstverständlich muß die Zeit für einen intensiven Kontakt ausreichend sein, sie soll aber auch nicht zu lang dauern, um eine unnötige thermische Beanspruchung des Polymerisats zu vermeiden. Im Rahmen der Erfindung hat es sich als vorteilhaft herausgestellt, wenn das gasförmige Medium auf das rohe Polyoxymethylen zwischen 10 und 300 min, bevorzugt zwischen 30 und 180 min, einwirken kann. Bei diesen Kontaktzeiten werden beste Ergebnisse erhalten.

Gemäß der Erfindung stellte sich überraschend heraus und ist aufgrund der einfachen Verfahrensweise äußerst zweckmäßig, daß als gasförmiges Medium einfach reiner drucklos überhitzter Wasserdampf verwendet wird. Die Anwesenheit von Luftsauerstoff ist auszuschließen, da dieser zu einer deutlichen Schädigung der Rohpolymeren führen kann.

Der drucklose überhitzte Wasserdampf wird bevorzugt in Konzentrationen von 1 - 200 g, vorzugsweise 10 - 70 g pro kg rohem Polyoxymethylen und pro h durch das rohe Polyoxymethylen durchgeleitet.

Die Intensität des Kontakts zwischen gasförmigem Medium und Rohpolymerisat kann im Rahmen der Erfindung beispielsweise dadurch gesteigert werden, daß man das rohe Polyoxymethylen unmittelbar nach seiner Polymerisation und vor der Behandlung mit dem gasförmigen Medium zerkleinert.

Zur kontinuierlichen Entmonomerisierung roher Oxymethylenpolymerer werden bevorzugt sich nach unten verjüngende, temperierbare Schachttrockner eingesetzt, wobei auf eine Durchmischung verzichtet wird und druckloser, überhitzter Wasserdampf im unteren Bereich der Schachttrockner eingedüst wird, und diesen von unten nach oben durchströmten. Hierbei findet eine Kontaktierung des Polyoxymethylens im Gegenstromverfahren statt, wobei vorzugsweise das übertretende Wasserdampf-Restmonomer-Gemisch bei ca. 60 - 80 °C kondensiert werden kann. Wahlweise wird das Kondensat einer weiteren separaten Aufarbeitung zugeführt.

Als Vorteile der erfindungsgemäßen Art der Monomerenentfernung sind insbesonders zu nennen:
- Es ergibt sich ein höherer Durchsatz der Rohpolymeren durch Aggregate, die instabile Kettenenden und Restmonomer entfernen.
- Das Volumen der Kondensate des Wasserdampf und der entfernten Monomere ist gering.
- Eine Entlastung der Monomerrückgewinnungsanlagen, und damit höhere Kapazitäten, resultierend aus höheren Trioxangehalten der Kondensate der Entmonomerisierungsschritte. Die Kondensate können direkt den Aufarbeitungsschritten für Monomere, ohne den sonst üblichen Aufkonzentrierungen zugeführt werden.
- Das sonst übliche Anbacken oder Verklumpen der Rohpolymerisate, hervorgerufen durch Restmonomer bei längerer Lagerung in der Kälte, entfällt.

Nachfolgend wird die Erfindung anhand von Beispielen eingehender erläutert.

### Restmonomerbestimmung

Zur Bestimmung der Restmonomeren, angegeben als Resttrioxan, wird eine Probe von 50 g Rohpolymer in 300 ml 0,1 %-iger Ammoniumcarbonatlösung, zuzüglich 20 ml Methanol, 30 Minuten lang am Rückfluß gekocht. Nach dem Erkalten wird über eine Glasfritte G3 abgenutscht und in 3 Portionen mit zusammen 500 ml VE-Wasser gewaschen. Das von Restmonomeren befreite, noch feuchte Rohpolymer wird bei 90 °C im Vakuum über 3 Stunden getrocknet. Die Massendifferenz zur Einwaage wird als Gew.-% Trioxan angegeben und entspricht dem maximalen Gehalt an Restmonomeren.

### Eingesetzte Materialien

### POM 1:

Rohpolymer der Ultraform GmbH mit 2,5 % Dioxepan als Comonomer. Nach der Polymerisation wurde das Copolymer gebrochen und gemahlen; 98 % der Partikel hatten einen Durchmesser < 3,25 mm. Der Katalysator im zerkleinerten Rohpolymer wurde desaktiviert und das Rohpolymer gepuffert, aber nicht stabilisiert.

### POM 2:

Material aus der Laborproduktion mit 2,5 Gew.-% Comonomergehalt, inaktiviert mit gasförmigem Ammoniak, aber ohne Zusatz an Puffersubstanzen oder Antioxidans. Dieses Produkt wurde während des Begasens zu Partikeln < 4 mm gemahlen.

### POM 3:

Material aus der Laborproduktion mit 2,5 Gew.-% Dioxacycloheptan (1,3-Dioxepan) als Comonomer. Gemahlen wurde unter Stickstoff. Antioxidans und/oder Puffer wurden nicht zugesetzt. Die Partikelgröße entsprach der des POM 2.

### POM 4:

Copolymer der Ultraform GmbH mit 2,5 Gew.-% 1,3-Dioxacycloheptan (1,3-Dioxepan) als Comonomer, jedoch ohne jeglichen Zusatz an Antioxidans oder Puffer. Die Korngrößen waren entsprechend denen von POM 1.

### Beispiele:

### Versuch 1 (V 1)

Die Entfernung von Trioxan aus rohem Oxymethylencopolymer erfolgte in einer Laborapparatur, bestehend aus einem temperierbaren, mischbaren Vorlagegefäß von 2 l Fassungsvermögen, in welches Wasserdampf über das auf 126 ° C erhitzte Rohpolymer geleitet wurde. An Dampf wurden 51,9 g pro Stunde und kg rohem Oxymethylencopolymer eingespeist. Die Behandlungszeit betrug 2 Stunden. Das übertretende Trioxan/Wasser-Dampfgemisch wurde in einem auf 45 °C beheizten Kondensator kondensiert und die Oberfläche des Kondensators mit aus dem Auffanggefäß im Kreis geförderten Kondensat vollständig benetzt. Im Auffanggefäß für das Kondensat wurden 100 ml Wasser vorgelegt. An Rohpolymer wurden 1287,1 g POM 1 verwandt. Die Ergebnisse sind in Tabelle 1 zusammengestellt.

### Versuch 2 (V 2)

In der gleichen Apparatur wie in Beispiel 1 wurden 1100 g POM 2 auf 130 °C erhitzt und während 2 Stunden 18 g Wasserdampf pro kg Roh-POM und Stunde übergeleitet. Das übertretende Wasser/Trioxan-Dampfgemisch wurde analog Versuch 1 kondensiert. Die Ergebnisse sind in Tabelle 1 zusammengestellt.

### Versuch 3 (V 3)

Apparatur und Vorgehensweise wie in Versuch 2. Eingesetzt wurden 1100 g POM 2. An Wasserdampf wurden 18 g pro Stunde und kg Roh-POM eingespeist. Bei Innentemperaturen von 128 ° C wurde 3 Stunden entmonomerisiert. Die Ergebnisse sind in Tabelle 1 zusammengestellt.

### Beispiel 1 (B 1)

1131 g POM 3 wurden in der Apparatur aus Vergleichsversuch 1 zwei Stunden lang bei 130 °C mit 61 g drucklosem Wasserdampf pro Stunde und kg Rohpolymer 2 Stunden lang durchströmt. Die Ergebnisse sind in Tabelle 1 zusammengestellt.

### Beispiel 2 (B 2)

In einem senkrecht stehenden, doppelwandigen Glasrohr von ca. 30 mm Innendurchmesser wurden 640 g POM 3 gefüllt. Ohne Durchmischung des Rohpolymeren wurde die Manteltemperatur auf 125 °C eingestellt und 48 g Wasserdampf pro Stunde und kg Rohpolymer 3 Stunden lang durch das Rohpolymer geleitet. Die Kondensation des übertretenden Wasser/Trioxan-Dampfgemisches erfolgte in einen absteigenden Kühler, dessen Oberfläche mit im Kreis gepumpten Kondensat vollständig benetzt wurde. Im Auffanggefäß waren 100 ml Wasser vorgelegt. Die Ergebnisse sind in Tabelle 1 zusammengestellt.

### Beispiel 3 (B 3)

In einem diskontinuierlich betriebenen, manteltemperierbaren Pflugscharmischer wurden nach Durchspülung mit Stickstoff ca. 200 kg POM 4 eingetragen. Bei langsam drehendem Mischorgan (16 Upm) wurden bei 125 °C Polymertemperatur kontinuierlich 25 g Wasserdampf pro Stunde und kg Rohpolymer eingespeist. Die Kondensation des Trioxan/Wasser-Gemisches erfolgte in einem als Kondensator betriebenen Venturiwäscher. Die Versuchsdauer lag bei 2,5 Stunden. Die Ergebnisse sind in Tabelle 1 zusammengestellt.

### Beispiel 4 (B 4)

In der gleichen Technikumsapparatur wie in Beispiel 3 wurden unter ansonsten zu Beispiel 3 unveränderten Bedingungen ca. 200 kg POM 4 mit 20 g Dampf pro Stunde und kg Rohpolymer entmonomerisiert. Die Versuchsdauer betrug 90 Minuten. Die Ergebnisse sind in Tabelle 1 zusammengestellt.

### Beispiel 5 (B 5)

Analog Beispiel 4 wurden ca. 200 kg POM 4 bei 120 °C und 15 g Wasserdampf pro kg Rohpolymer und Stunde in der Technikumsapparatur von Beispiel 3 entmonomerisiert. Die Versuchsdauer betrug 90 Minuten. Die Ergebnisse sind in Tabelle 1 zusammengestellt.

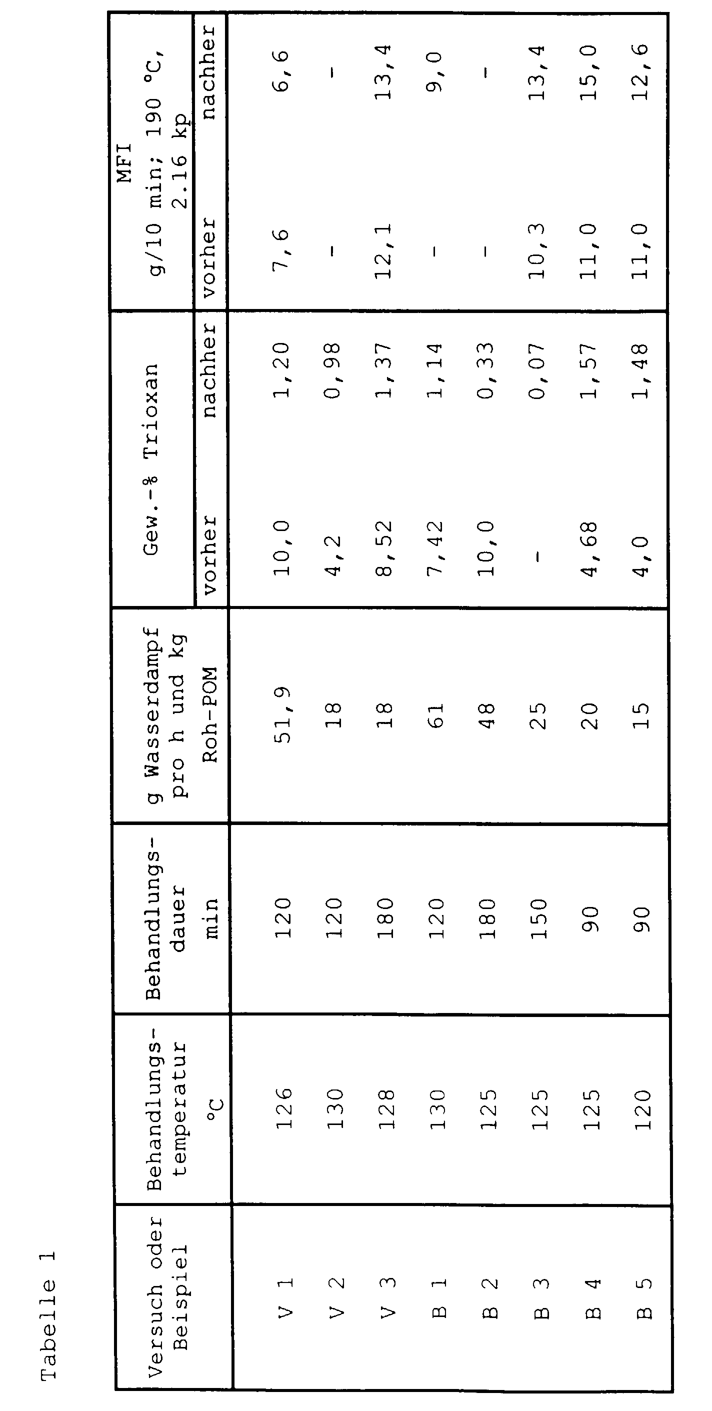

Aus der vorstehenden Tabelle wird ersichtlich, daß in jedem Falle eine weitgehende Entmonomerisierung nach dem erfindungsgemäßen Verfahren gelingt. Der Trioxananteil im Rohpolymerisat (in Gew.-% bezogen auf die Gesamtmasse des POM vor der Entmonomerisierung) sinkt deutlich (vgl. Sp. "nachher"). Darüber hinaus findet keine wesentliche Schädigung des POM's bei dieser Behandlung statt, was aus dem fehlenden bis geringen Molekulargewichtsabbau folgert, der sich aus dem jeweiligen △ MFI (= MFI (nachher) - MFI (vorher)) ergibt. Der Molekulargewichtsabbau in den Technikumsversuchen B 3 - B 5 beruhte auf einer ggf. leicht zu vermeidenden zeitlichen Verzögerung zwischen Polymerisierung und Entmonomerisierung, in welcher ein gänzlicher Luftausschluß nicht gewährleistet werden konnte.

Weitere Ausführungsvarianten und Vorteile der Erfindung ergeben sich aus den nachfolgenden Ansprüchen.

## Patentansprüche

1. Verfahren zur Aufarbeitung von rohem,
restmonomerhaltigem Polyoxymethylen, wobei das Restmonomer, das in der Polymerisationsreaktion zur Herstellung des Polyoxymethylens nicht verbraucht wurde, wenigstens teilweise in Form zyklischer Formaldehydderivate vorliegt,
bei dem das rohe, restmonomerhaltige Polyoxymethylen vor einer ggf. sich anschließenden Stabilisierung trocken mit einem gegenüber Polyoxymethylen inerten gasförmigen Medium bei einer Temperatur zwischen 114 °C und seiner Erweichungstemperatur und bei einem Druck von weniger als 1,2 · 10⁵ Pa behandelt wird,
**dadurch gekennzeichnet,**
daß als gasförmiges Medium reiner drucklos überhitzter Wasserdampf verwendet wird, so daß ein Polyoxymethylen mit einem Gehalt von weniger als 2 Gew.-% Restmonomer resultiert.

2. Verfahren nach Anspruch 1,
**dadurch gekennzeichnet**,
daß das rohe Polyoxymethylen bei einer Temperatur zwischen 115 - 135 °C, bevorzugt 120 - 130 °C, behandelt wird.

3. Verfahren nach einem der vorhergehenden Ansprüche,
**dadurch gekennzeichnet,**
daß das rohe Polyoxymethylen 10 - 300 min, bevorzugt 30 - 180 min, behandelt wird.

4. Verfahren nach einem der vorhergehenden Ansprüche,
**dadurch gekennzeichnet,**
daß überhitzter Wasserdampf in Konzentrationen von 1 - 200 g, vorzugsweise 10 - 70 g pro kg rohem Polyoxymethylen und pro h durch das rohe Polyoxymethylen durchgeleitet wird.

5. Verfahren nach einem der vorhergehenden Ansprüche,
**dadurch gekennzeichnet,**
daß das Polyoxymethylen unmittelbar nach seiner Polymerisation und vor der Behandlung mit dem gasförmigen Medium zerkleinert wird.

6. Verfahren nach einem der vorhergehenden Ansprüche,
**dadurch gekennzeichnet,**
daß die Behandlung des rohen Polyoxymethylens kontinuierlich in einem Schachttrockner im Gegenstromverfahren erfolgt
und
übertretendes Wasserdampf-Restmonomer-Gemisch bei 60 -80 °C kondensiert und einer separaten Aufarbeitung zugeführt werden.

## Claims

1. Process for working up crude polyoxymethylene which contains residual monomer, wherein at least part of the residual monomer not consumed in the polymerisation reaction to produce the polyoxymethylene is present in the form of cyclic formaldehyde derivatives,
in which, prior to a stabilisation which optionally follows, the crude polyoxymethylene which contains residual monomer is treated in the dry state with a gaseous medium which is inert to polyoxymethylene at a temperature between 114°C and the softening temperature of the crude polyoxymethylene and at a pressure of less than 1.2 · 10⁵ Pa,
characterised in that pure pressureless superheated steam is used as the gaseous medium, such that a polyoxymethylene results which contains less than 2 wt.% residual monomer.

2. Process according to Claim 1,
characterised in that the crude polyoxymethylene is treated at a temperature between 115 and 135°C, preferably between 120 and 130°C.

3. Process according to one of the preceding claims, characterised in that the crude polyoxymethylene is treated for from 10 to 300 minutes, preferably 30 to 180 minutes.

4. Process according to one of the preceding claims, characterised in that superheated steam is passed through the crude polyoxymethylene at concentrations of from 1 to 200 g, preferably 10 to 70 g, per kg of crude polyoxymethylene and per hour.

5. Process according to one of the preceding claims, characterised in that the polyoxymethylene is comminuted immediately after polymerisation and before the treatment with the gaseous medium.

6. Process according to one of the preceding claims, characterised in that the treatment of the crude polyoxymethylene takes place in counter-current in a shaft drier in continuous manner,
and
the mixture of steam and residual monomer passing over is condensed at from 60 to 80°C and supplied to separate working-up.

## Revendications

1. Procédé de traitement de polyoxyméthylène brut, contenant un monomère résiduel, dans lequel le monomère résiduel qui n'est pas consommé dans la réaction de polymérisation pour la production du polyoxyméthylène se présente au moins en partie sous forme de dérivés cycliques de formaldéhyde,
dans lequel le polyoxyméthylène brut contenant un monomère résiduel est traité avant une stabilisation éventuelle ultérieure à sec avec un milieu gazeux inerte vis-à-vis du polyoxyméthylène, à une température comprise entre 114°C et sa température de ramollissement et une pression inférieure à 1,2 x 10⁵ Pa,
caractérisé en ce qu'
on utilise comme milieu gazeux de la vapeur d'eau surchauffée sans pression, de manière qu'il en résulte un polyoxyméthylène ayant une teneur en monomère résiduelle inférieure à 2 % en poids.

2. Procédé selon la revendication 1,
caractérisé en ce qu'
on traite le polyoxyméthylène brut à une température comprise entre 115 et 135°C, de préférence entre 120 et 130°C.

3. Procédé selon l'une des revendications précédentes,
caractérisé en ce qu'
on traite le polyoxyméthylène brut pendant 10 à 300 minutes, de préférence pendant 30 à 180 minutes.

4. Procédé selon l'une des revendications précédentes,
caractérisé en ce qu'
on fait passer de la vapeur d'eau surchauffée à des concentrations de 1 à 200 g, de préférence de 10 à 70 g par kg de polyoxyméthylène brut et par heure à travers le polyoxyméthylène brut.

5. Procédé selon l'une des revendications précédentes,
caractérisé en ce qu'
on broie le polyoxyméthylène immédiatement après sa polymérisation et avant le traitement avec le milieu gazeux.

6. Procédé selon l'une des revendications précédentes,
caractérisé en ce que
le traitement du polyoxyméthylène brut s'effectue de façon continue dans un sécheur à couloir dans un procédé à contre-courant et
en ce qu'
on condense à 60-80°C le mélange vapeur d'eau-monomère résiduel qui passe et on l'introduit dans un traitement séparé.
